# EUROPEAN PATENT APPLICATION

(11) **EP 3 211 316 A1**
(43) Date of publication of application: **30.08.2017**
(21) Application number: 17157101.1
(22) Date of filing: 21.02.2017
(51) Int. Cl.: F23R 3/04, F23R 3/14, F23R 3/28, F23R 3/34, F23R 3/46

(54) **PILOT NOZZLES IN GAS TURBINE COMBUSTORS**

(30) Priority: 26.02.2016 US 201615054623
(71) Applicant: General Electric Company, Schenectady, NY 12345 (US)
(72) Inventor: KULKARNI, Rahul Ravindra, 560066 Bangalore (IN)
(74) Representative: Lee, Brenda

(57) **Abstract**

A fuel nozzle 12 for a gas turbine engine that includes: an elongated centerbody 52; an elongated peripheral wall 50 formed about the centerbody so to define a primary flow annulus; a primary fuel and air supply in fluid communication with the primary flow annulus; and a pilot nozzle 40. The pilot nozzle, formed in the centerbody, may have axially elongated air and mixing tubes 41 extending between inlets and outlets defined, respectively, through upstream and downstream faces of the pilot nozzle. A secondary air supply may be communicate with the inlets of the air and mixing tubes. A fuel port may be positioned in the mixing tubes for connecting each to a secondary fuel supply. An uninterrupted sidewall sealing structure in each of the air tubes may segregate an air flow therethrough from the secondary fuel supply. The air and mixing tubes may be configured as canted tubes so to induce a downstream swirling flow.

## Description

### BACKGROUND OF THE INVENTION

The present invention generally involves a gas turbine engine that combusts a hydrocarbon fuel mixed with air to generate a high temperature gas stream that drives turbine blades to rotate a shaft attached to the blades. More particularly, but not by way of limitation, the present invention relates to combustor fuel nozzles that include pilot nozzles that premix fuel and air to achieve lower nitrogen oxides.

Gas turbine engines are widely used to generate power for numerous applications. A conventional gas turbine engine includes a compressor, a combustor, and a turbine. In a typical gas turbine engine, the compressor provides compressed air to the combustor. The air entering the combustor is mixed with fuel and combusted. Hot gases of combustion are exhausted from the combustor and flow into the blades of the turbine so as to rotate the shaft of the turbine connected to the blades. Some of that mechanical energy of the rotating shaft drives the compressor and/or other mechanical systems.

As government regulations disfavor the release of nitrogen oxides into the atmosphere, their production as byproducts of the operation of gas turbine engines is sought to be maintained below permissible levels. One approach to meeting such regulations is to move from diffusion flame combustors to combustors that employ lean fuel and air mixtures using a fully premixed operations mode to reduce emissions of, for example, nitrogen oxides (commonly denoted NOx) and carbon monoxide (CO). These combustors are variously known in the art as Dry Low NOx (DLN), Dry Low Emissions (DLE) or Lean Pre Mixed (LPM) combustion systems.

Fuel-air mixing affects both the levels of nitrogen oxides generated in the hot gases of combustion of a gas turbine engine and the engine's performance. A gas turbine engine may employ one or more fuel nozzles to intake air and fuel to facilitate fuel-air mixing in the combustor. The fuel nozzles may be located in a headend of the combustor, and may be configured to intake an air flow to be mixed with a fuel input. Typically, each fuel nozzle may be internally supported by a center body located inside of the fuel nozzle, and a pilot can be mounted at the downstream end of the center body. As described for example in U.S. Pat. No. 6,438,961, which is incorporated in its entirety herein by this reference for all purposes, a so-called swozzle can be mounted to the exterior of the center body and located upstream from the pilot. The swozzle has curved vanes that extend radially from the center body across an annular flow passage and from which fuel is introduced into the annular flow passage to be entrained into a flow of air that is swirled by the vanes of the swozzle.

Various parameters describing the combustion process in the gas turbine engine correlate with the generation of nitrogen oxides. For example, higher gas temperatures in the combustion reaction zone are responsible for generating higher amounts of nitrogen oxides. One way of lowering these temperatures is by premixing the fuel-air mixture and reducing the ratio of fuel to air that is combusted. As the ratio of fuel to air that is combusted is lowered, so too the amount of nitrogen oxides is lowered. However, there is a trade-off in performance of the gas turbine engine. For as the ratio of fuel to air that is combusted is lowered, there is an increased tendency of the flame of the fuel nozzle to blow out and thus render unstable the operation of the gas turbine engine. A pilot of a diffusion flame type has been used for better flame stabilization in a combustor, but doing so increases NOx. Accordingly, there remains a need for improved pilot nozzle assemblies that offer flame stabilization benefits while also minimizing the NOx emissions generally associated with pilot nozzles.

### BRIEF DESCRIPTION OF THE INVENTION

The present application thus describes a fuel nozzle for a gas turbine engine that includes: an elongated centerbody; an elongated peripheral wall formed about the centerbody so to define a primary flow annulus therebetween; a primary fuel supply and a primary air supply in fluid communication with an upstream end of the primary flow annulus; and a pilot nozzle. The pilot nozzle, formed in the centerbody, may have axially elongated air and mixing tubes extend between an inlet and outlet defined, respectively, through upstream and downstream faces of the pilot nozzle. A secondary air supply may be configured so to fluidly communicate with the inlet of each of the air and mixing tubes. A fuel port may be positioned between the inlet and the outlet of each of the mixing tubes for connecting each of the mixing tubes to a secondary fuel supply. An uninterrupted sidewall sealing structure between the inlet and the outlet of each of the air tubes may segregate an air flow therethrough from the secondary fuel supply. The plurality of the tubes may be configured as canted tubes that are angled relative the central axis of the fuel nozzle so to induce a downstream swirling flow in a collective discharge therefrom.

### BRIEF DESCRIPTION OF THE DRAWINGS

Figure 1 illustrates a block diagram of an exemplary gas turbine in which embodiments of the present invention may be used;
Figure 2 is a cross-sectional view of an exemplary combustor such as may be used in the gas turbine illustrated in Figure 1;
Figure 3 includes a view that is partially in perspective and partially in cross-section that depicts an exemplary combustor nozzle according to certain aspects of the present invention;
Figure 4 illustrates a more detailed cross-sectional view of the combustor nozzle of Figure 3;
Figure 5 illustrates an end view taken along the sight lines designated 5-5 in Figure 4;
Figure 6 includes a simplified side view of a mixing tube that may be used in a pilot nozzle;
Figure 7 illustrates a simplified side view of an alternative mixing tube having a canted configuration according to certain aspects of the present invention;
Figure 8 shows a cross-sectional view depicting an exemplary pilot nozzle having canted mixing tubes according to certain aspects of the present invention;
Figure 9 illustrates a side view of canted mixing tubes according to an exemplary embodiment of the present invention;
Figure 10 includes a perspective view of the mixing tube of Figure 9;
Figure 11 illustrates a side view of canted mixing tubes according to an alternative embodiment of the present invention;
Figure 12 shows a side view of canted mixing tube according to another alternative embodiment of the present invention;
Figure 13 illustrates a side view of an additional embodiment in which linear mixing tubes are combined with canted mixing tubes;
Figure 14 includes a perspective view of the mixing tubes of Figure 13;
Figure 15 shows an inlet view of the mixing tubes of Figure 13;
Figure 16 illustrates an exit view of the mixing tubes of Figure 13;
Figure 17 illustrates a side view of an additional embodiment that includes counter-swirling helical mixing tubes according to certain other aspects of the present invention;
Figure 18 includes a perspective view of the mixing tubes of Figure 17;
Figure 19 shows an inlet view of the mixing tubes of Figure 17;
Figure 20 illustrates an exit view of the mixing tubes of Figure 17;
Figure 21 illustrates an exit view of an alternative embodiment of mixing tubes that includes an outboard component to the direction of discharge;
Figure 22 illustrates an exit view of an alternative embodiment of mixing tubes that includes an inboard component to the direction of discharge;
Figure 23 illustrates a side view of canted mixing tubes according to an alternative embodiment of the present invention;
Figure 24 shows a side view of canted mixing tube according to another alternative embodiment of the present invention;
Figure 25 schematically illustrates results of a directional flow analysis of mixing tubes having a linear (i.e., axial) orientation; and
Figure 26 schematically illustrates results of a directional flow analysis of mixing tubes having a tangentially canted orientation.

### DETAILED DESCRIPTION OF THE INVENTION

Aspects and advantages of the invention are set forth below in the following description, or may be obvious from the description, or may be learned through practice of the invention. Reference will now be made in detail to present embodiments of the invention, one or more examples of which are illustrated in the accompanying drawings. The detailed description uses numerical designations to refer to features in the drawings. Like or similar designations in the drawings and description may be used to refer to like or similar parts of embodiments of the invention.

As will be appreciated, each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents. It is to be understood that the ranges and limits mentioned herein include all sub-ranges located within the prescribed limits, inclusive of the limits themselves unless otherwise stated.

Additionally, certain terms have been selected to describe the present invention and its component subsystems and parts. To the extent possible, these terms have been chosen based on the terminology common to the technology field. Still, it will be appreciate that such terms often are subject to differing interpretations. For example, what may be referred to herein as a single component may be referenced elsewhere as consisting of multiple components, or, what may be referenced herein as including multiple components may be referred to elsewhere as being a single component. In understanding the scope of the present invention, attention should not only be paid to the particular terminology used, but also to the accompanying description and context, as well as the structure, configuration, function, and/or usage of the component being referenced and described, including the manner in which the term relates to the several figures, as well as, of course, the precise usage of the terminology in the appended claims. Further, while the following examples are presented in relation to a certain type of turbine engine, the technology of the present invention also may be applicable to other types of turbine engines as would be understood by a person of ordinary skill in the relevant technological arts.

Given the nature of turbine engine operation, several descriptive terms may be used throughout this application to explain the functioning of the engine and/or the several sub-systems or components included therewithin, and it may prove beneficial to define these terms at the onset of this section. Accordingly, these terms and their definitions, unless stated otherwise, are as follows. The terms "forward" and "aft", without further specificity, refer to directions relative to the orientation of the gas turbine. That is, "forward" refers to the forward or compressor end of the engine, and "aft" refers to the aft or turbine end of the engine. It will be appreciated that each of these terms may be used to indicate movement or relative position within the engine. The terms "downstream" and "upstream" are used to indicate position within a specified conduit relative to the general direction of flow moving through it. (It will be appreciated that these terms reference a direction relative to an expected flow during normal operation, which should be plainly apparent to anyone of ordinary skill in the art.) The term "downstream" refers to the direction in which the fluid is flowing through the specified conduit, while "upstream" refers to the direction opposite that. Thus, for example, the primary flow of working fluid through a turbine engine, which begins as air moving through the compressor and then becomes combustion gases within the combustor and beyond, may be described as beginning at an upstream location toward an upstream or forward end of the compressor and terminating at an downstream location toward a downstream or aft end of the turbine. In regard to describing the direction of flow within a common type of combustor, as discussed in more detail below, it will be appreciated that compressor discharge air typically enters the combustor through impingement ports that are concentrated toward the aft end of the combustor (relative to the longitudinal axis of the combustor and the aforementioned compressor/turbine positioning defining forward/aft distinctions). Once in the combustor, the compressed air is guided by a flow annulus formed about an interior chamber toward the forward end of the combustor, where the air flow enters the interior chamber and, reversing its direction of flow, travels toward the aft end of the combustor. In yet another context, coolant flows through cooling passages may be treated in the same manner.

Additionally, given the configuration of compressor and turbine about a central common axis, as well as the cylindrical configuration common to many combustor types, terms describing position relative to an axis may be used herein. In this regard, it will be appreciated that the term "radial" refers to movement or position perpendicular to an axis. Related to this, it may be required to describe relative distance from the central axis. In this case, for example, if a first component resides closer to the central axis than a second component, the first component will be described as being either "radially inward" or "inboard" of the second component. If, on the other hand, the first component resides further from the central axis than the second component, the first component will be described herein as being either "radially outward" or "outboard" of the second component. Additionally, as will be appreciated, the term "axial" refers to movement or position parallel to an axis. Finally, the term "circumferential" refers to movement or position around an axis. As mentioned, while these terms may be applied in relation to the common central axis that extends through the compressor and turbine sections of the engine, these terms also may be used in relation to other components or sub-systems of the engine. For example, in the case of a cylindrically shaped combustor, which is common to many gas turbine machines, the axis which gives these terms relative meaning is the longitudinal central axis that extends through the center of the cross-sectional shape, which is initially cylindrical, but transitions to a more annular profile as it nears the turbine.

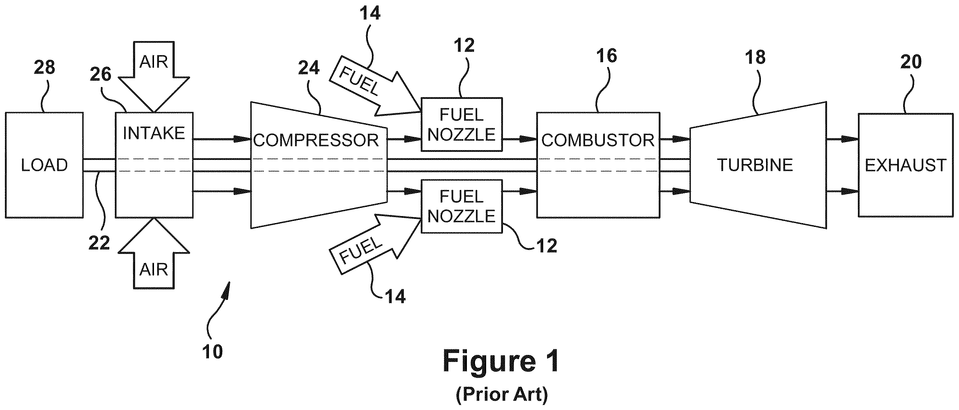

Referring to Figure 1, a simplified drawing of several portions of a gas turbine system 10 is illustrated. The turbine system 10 may use liquid or gas fuel, such as natural gas and/or a hydrogen rich synthetic gas, to run the turbine system 10. As depicted, a plurality of fuel-air nozzles (or, as referred to herein, "fuel nozzles 12") of the type described more fully below intakes a fuel supply 14, mixes the fuel with an air supply, and directs the fuel-air mixture into a combustor 16 for combusting. The combusted fuel-air mixture creates hot pressurized exhaust gases that may be directed through a turbine 18 toward an exhaust outlet 20. As the exhaust gases pass through the turbine 18, the gases force one or more turbine blades to rotate a shaft 22 along an axis of the turbine system 10. As illustrated, the shaft 22 may be connected to various components of the turbine system 10, including a compressor 24. The compressor 24 also includes blades that may be coupled to the shaft 22. As the shaft 22 rotates, the blades within the compressor 24 also rotate, thereby compressing air from an air intake 26 through the compressor 24 and into the fuel nozzles 12 and/or combustor 16. The shaft 22 also may be connected to a load 28, which may be a vehicle or a stationary load, such as an electrical generator in a power plant or a propeller on an aircraft, for example. As will be understood, the load 28 may include any suitable device capable of being powered by the rotational output of turbine system 10.

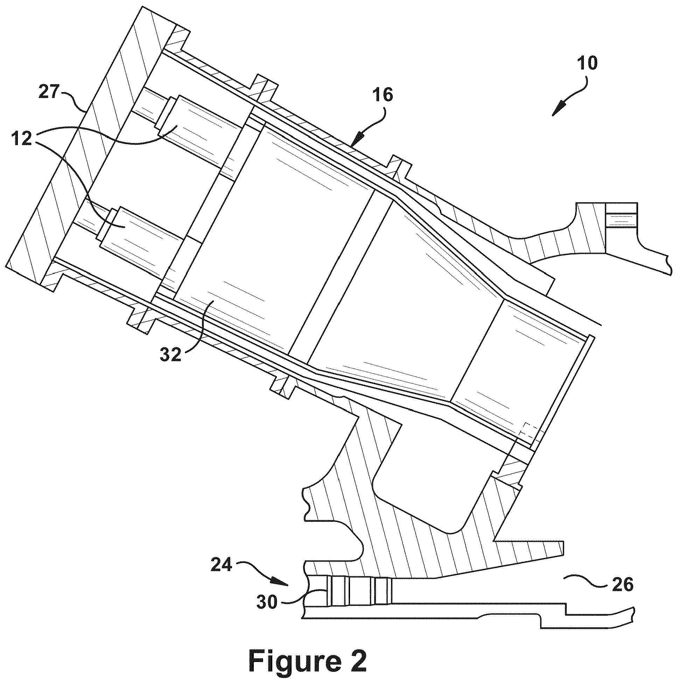

Figure 2 is a simplified drawing of cross sectional views of several portions of the gas turbine system 10 schematically depicted in Figure 1. As schematically shown in Figure 2, the turbine system 10 includes one or more fuel nozzles 12 located in a headend 27 of the combustor 16 in the gas turbine engine 10. Each illustrated fuel nozzle 12 may include multiple fuel nozzles integrated together in a group and/or a standalone fuel nozzle, wherein each illustrated fuel nozzle 12 relies at least substantially or entirely on internal structural support (e.g., load bearing fluid passages). Referring to Figure 2, the system 10 comprises a compressor section 24 for pressurizing a gas, such as air, flowing into the system 10 via air intake 26. In operation, air enters the turbine system 10 through the air intake 26 and may be pressurized in the compressor 24. It should be understood that while the gas may be referred to herein as air, the gas may be any gas suitable for use in a gas turbine system 10. Pressurized air discharged from the compressor section 24 flows into a combustor section 16, which is generally characterized by a plurality of combustors 16 (only one of which is illustrated in Figures 1 and 2) disposed in an annular array about an axis of the system 10. The air entering the combustor section 16 is mixed with fuel and combusted within the combustion chamber 32 of the combustor 16. For example, the fuel nozzles 12 may inject a fuel-air mixture into the combustor 16 in a suitable fuel-air ratio for optimal combustion, emissions, fuel consumption, and power output. The combustion generates hot pressurized exhaust gases, which then flow from each combustor 16 to a turbine section 18 (Figure 1) to drive the system 10 and generate power. The hot gases drive one or more blades (not shown) within the turbine 18 to rotate the shaft 22 and, thus, the compressor 24 and the load 28. The rotation of the shaft 22 causes blades 30 within the compressor 24 to rotate and draw in and pressurize the air received by the intake 26. It readily should be appreciated, however, that a combustor 16 need not be configured as described above and illustrated herein and in general may have any configuration that permits pressurized air to be mixed with fuel, combusted and transferred to a turbine section 18 of the system 10.

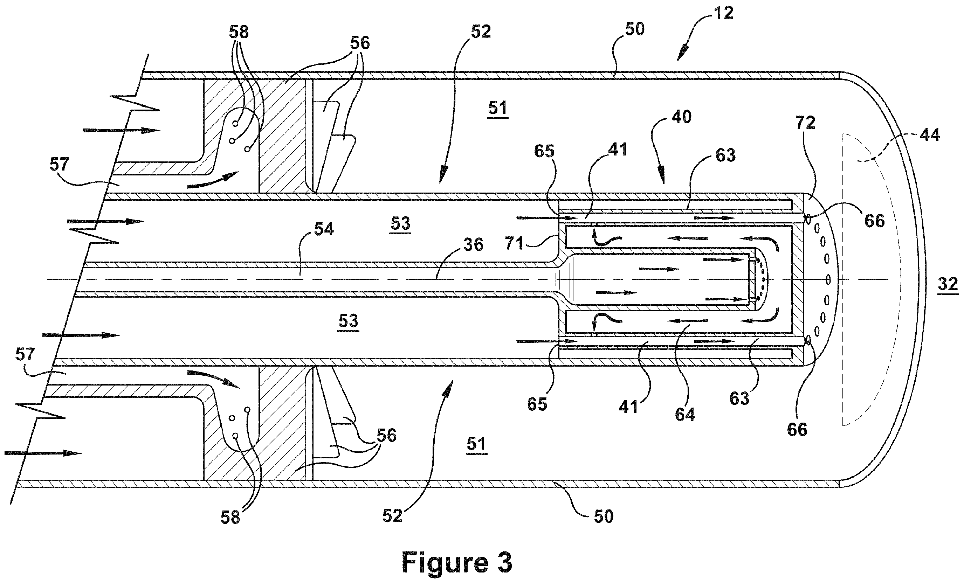

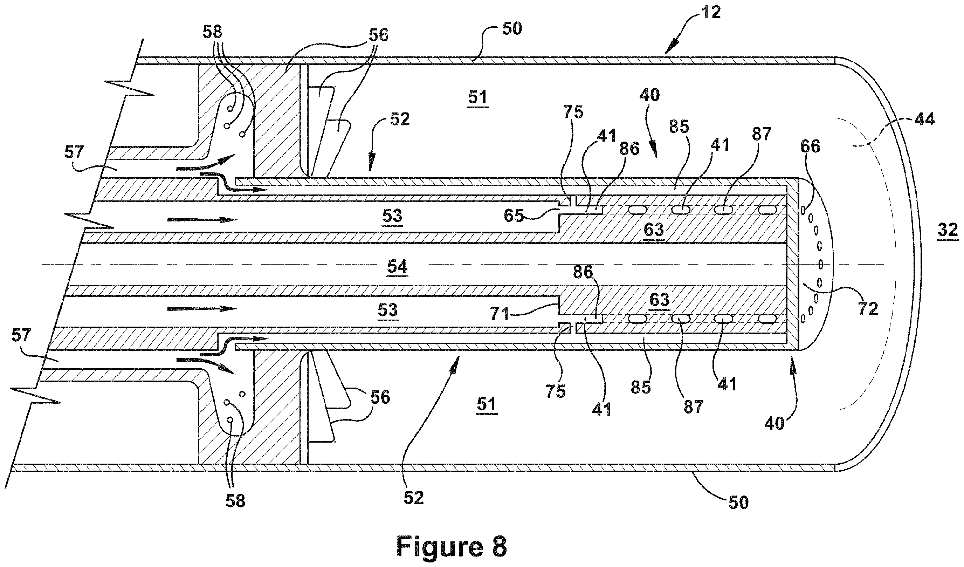

Turning now to Figures 3 through 5, an exemplary configuration of a premixing pilot nozzle 40 (or simply "pilot nozzle 40") is presented in accordance with certain aspects of the present invention. The pilot nozzle 40 may include several mixing tubes 41 within which a fuel and air mixture is created for combustion within the combustion chamber 32. Figures 3 through 5 illustrate one arrangement by which fuel and air may be supplied to the several mixing tubes 41 of the pilot nozzle 40. Another such fuel-air delivery configuration is provided in relation to Figure 8, and it should be appreciated that other fuel and air supply arrangements are also possible and that these examples should not be construed as limiting unless indicated in the appended claim set.

As depicted in Figures 3, 4 and 5, the mixing tubes 41 may have a linear and axial configuration. In such cases, each mixing tube 41 may be configured so that a flow of fluid therefrom is discharged in a direction (or, as used herein, includes a "discharge direction") that is parallel to the central axis 36 of fuel nozzle 12 or, alternatively, at least lacks the tangentially canted orientation relative to the central axis 36 of the fuel nozzle. As used herein, such mixing tubes 41 may be referred to as "axial mixing tubes". Accordingly, an axial mixing tube 41 may be oriented so that it is substantially parallel to the central axis 36 of the fuel nozzle 12, or, alternatively, the axial mixing tube 41 may be oriented so to include a radially canted orientation relative to the central axis 36 as long as the mixing tube lacks the tangentially canted component. Other mixing tubes 41, which will be referred to as "canted mixing tubes", may include this tangentially angled or canted orientation such that each releases the mixture of fuel and air in a direction that is skewed or tangentially canted relative to the central axis 36 of the fuel nozzle 12. As described below, this type of configuration may be used to create a swirling pattern within the combustion zone upon release that improves certain performance aspects of the pilot nozzle 40 and, thereby, the performance of the fuel nozzle 12.

As illustrated, the fuel nozzle 12 may include an axially elongating peripheral wall 50 that defines an outer envelope of the component. The peripheral wall 50 of fuel nozzle 12 has an outer surface and an inner surface facing opposite the outer surface and defining an axially elongating inner cavity. As used herein, a central axis 36 of the nozzle 12 is defined as the central axis of the fuel nozzle 12 which, in this example, is defined as the central axis of the peripheral wall 50. The fuel nozzle 12 may further include a hollow, axially elongating centerbody 52 disposed within the cavity formed by the peripheral wall 50. Given the concentric arrangement that is shown between the peripheral wall 50 and the centerbody 52, the central axis 36 may be common to each component. The centerbody 52 may be axially defined by a wall that defines an upstream end and a downstream end. A primary air flow channel 51 may be defined in the annular space between the peripheral wall 50 and the exterior surface of the centerbody 52.

The fuel nozzle 12 may further include an axially elongated, hollow fuel supply line, which will be referred to herein as "center supply line 54", that extends through the center of the centerbody 52. Defined between the center supply line 54 and the outer wall of the centerbody 52, an elongated interior passage or secondary flow annulus 53 may extend axially from a forward position adjacent to the headend 27 toward the pilot nozzle 40. The center supply line 54 may similarly extend axially between the forward end of the centerbody 52, wherein it may form a connection with a fuel source (not shown) through the headend 27. The center supply line 54 may have a downstream end that is disposed at the aft end of the centerbody 52, and may provide a supply of fuel that ultimately is injected into the mixing tubes 41 of the pilot nozzle 40.

The primary fuel supply of the fuel nozzle 12 may be directed to the combustion chamber 32 of the combustor 16 through a plurality of swirler vanes 56, which, as illustrated in Figure 3, may be fixed vanes that extend across the primary flow annulus 51. According to aspects of the present invention, the swirler vanes 56 may define a so-called "swozzle" type fuel nozzle in which multiple vanes 56 extends radially between the centerbody 52 and the peripheral wall 50. As schematically shown in Figure 3, each of the swirler vanes 56 of the swozzle desirably may be provided with internal fuel conduits 57 that terminate in fuel injection ports 58 from which the primary fuel supply (the flow of which is indicated by the arrows) is introduced into the primary air flow being directed through the primary flow annulus 51. As this primary air flow is directed against the swirler vanes 56, a swirling pattern is imparted that, as will be appreciated, facilitates the mixing of the air and fuel supplies within the primary flow annulus 51. Downstream of the swirler vanes 56, the swirling air and fuel supplies brought together within the flow annulus 51 may continue to mix before being discharged into the combustion chamber 32 for combustion. As used herein, when distinguishing from the pilot nozzle 40, the primary flow annulus 51 may be referred to as a "parent nozzle", and the fuel-air mixture brought together within the primary flow annulus 51 may be referred to as originating within the "parent nozzle". When using these designations, it will be appreciated that the fuel nozzle 12 includes a parent nozzle and a pilot nozzle, and that each of these injects separate fuel and air mixtures into the combustion chamber.

The centerbody 52 may be described as including axially-stacked sections, with the pilot nozzle 40 being the axial section disposed at the downstream or aftward end of the centerbody 52. According to the exemplary embodiment shown, the pilot nozzle 40 includes a fuel plenum 64 disposed about a downstream end of the center supply line 54. As illustrated, the fuel plenum 64 may fluidly communicate with the center supply line 54 via one or more fuel ports 61. Thus, fuel may travel through the supply line 54 so to enter the fuel plenum 64 via the fuel ports 61. The pilot nozzle 40 may further include an annular-shaped centerbody wall 63 disposed radially outward from the fuel plenum 64 and desirably concentric with respect to the central axis 36.

As stated, the pilot nozzle 40 may include a plurality of axially elongated, hollow mixing tubes 41 disposed just outboard of the fuel plenum 64. The pilot nozzle 40 may be axially defined by an upstream face 71 and a downstream face 72. As illustrated, the mixing tubes 41 may extend axially through the centerbody wall 63. A plurality of fuel ports 75 may be formed within the centerbody wall 63 for supplying fuel from the fuel plenum 64 into the mixing tubes 41. Each of the mixing tubes 41 may extend axially between an inlet 65, which is formed through the upstream face 71 of the pilot nozzle 40, and an outlet 66, which is formed through the downstream face 72 of the pilot nozzle 40. Configured thusly, an air flow may be directed into the inlet 65 of each mixing tube 41 from the secondary flow annulus 53 of the centerbody 52. Each mixing tube 41 may have at least one fuel port 75 that fluidly communicates with the fuel plenum 64 such that a flow of fuel exiting from the fuel plenum 64 passes into each mixing tube 41. A resulting fuel-air mixture may then travel downstream in each mixing tube 41, and then may be injected into the combustion chamber 32 from the outlets 66 formed through the downstream face 72 of the pilot nozzle 40. As will be appreciated, given the linear configuration and axial orientation of the mixing tubes 41 shown in Figures 3 through 5, the fuel-air mixture that discharges from the outlets 66 is directed in a direction that is substantially parallel to the central axis 36 of the fuel nozzle 12. While the fuel-air mixture tends to spread radially from each mixing tube 41 upon being injected into the combustion chamber 32, applicants have discovered that the radial spread is not significant. Indeed, studies have shown that the equivalence ratio (i.e., air/fuel ratio) at the section of the burn exit plane 44 that is located immediately downstream of the outlet 66 of each mixing tube 41 can be almost twice the equivalence ratio that exists at the section of the burn exit plane 44 that is located immediately downstream of the central axis 36. High equivalence ratios at a location that is immediately downstream of the outlet 66 of each mixing tube 41 can continuously and effectively light the fuel-air mixture through parent nozzle, and thereby may be used to stabilize the flame even if the flame operates near lean-blow-out ("LBO") condition.

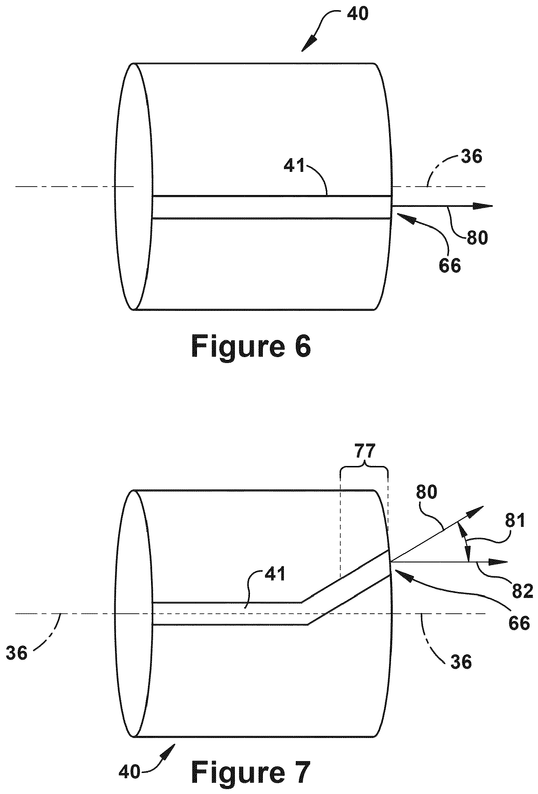

Figures 6 and 7 include a simplified side view comparing different orientations of a single mixing tube 41 within a pilot nozzle 40 relative to the central axis 36 of the fuel nozzle 12 (i.e., as may be defined by the peripheral wall 50). Figure 6 shows a mixing tube 41 having an axial configuration, which is the configuration discussed above in relation to Figures 3 through 5. As indicated, the mixing tube 41 is aligned substantially parallel to the central axis 36 so that the fuel-air mixture discharged therefrom (i.e., from the outlet 66) has a direction of discharge ("discharge direction") 80 that is approximately parallel to a downstream continuation of the central axis 36 of the fuel nozzle 12.

As illustrated in Figure 7, according to an alternative embodiment of the present invention, the mixing tube 41 includes a canted outlet section 79 at a downstream end that is angled or canted tangentially relative to the central axis 36 of the fuel nozzle 12. Configured in this manner, the fuel-air mixture that flows from the outlet 66 has a discharge direction 80 that extends from and follows the tangentially canted orientation of the canted outlet section 79. As used herein, the canted outlet section 79 may be defined in relation to the acute tangential angle 81 it forms relative to the downstream direction of the axial reference line 82 (which, as used herein, is defined as a reference line that is parallel to the central axis 36).

As discussed in more detail below, performance advantages for the pilot nozzle 40 may be achieved by configuring the several mixing tubes to include such canted orientations. Typically the mixing tubes 41 may each be similarly configured and arranged in parallel, though certain embodiments discussed in more detail below include exceptions to this. The extent to which the canted outlet sections 79 of the mixing tubes 41 are tangentially angled, i.e., the size of the tangential angle 81 formed between the discharge direction 80 and the axial reference line 82, may vary. As will be appreciated, the tangential angle 81 may depend upon several criteria. Further, though results may be optimal at certain values, various levels of desirable performance benefits may be achieved across a wide spectrum of values for the tangential angle 81. Applicants have been able to determine several preferred embodiments which will now be disclosed. According to one embodiment, the tangential angle 81 of the canted mixing tube 41 includes a range of between 10° and 70°. According to another embodiment, the tangential angle 81 includes a range of between 20° and 55°.

Though the simplified version shown in Figure 7 shows only one mixing tube 41, each of the mixing tubes 41 may have a similar configuration and, relative to each other, may be oriented in parallel. When the angled orientation is applied consistently to each of the multiple mixing tubes 41 included in the pilot nozzle 40, it will be appreciated that the tangential orientation of the discharge direction creates a swirling flow just downstream of the downstream face 72 of the pilot nozzle 40. As discovered by the present applicants, this swirling flow may be used to achieve certain performance advantages, which will be described in more detail below. According to one exemplary embodiment, the mixture discharged from the mixing tubes 41 may be made to "co-swirl" with the swirling fuel-air mixture that is exiting from the primary flow annulus 51 (i.e., in cases where the primary flow annulus 51 includes the swirler vanes 56).

As described in relation to several alternative embodiments provided below, the mixing tubes 41 may be configured to achieve this tangentially angled discharge direction 80 in several ways. For example, mixing tubes 41 that include linear segments that connect at elbows (as in Figure 7) may be used to angle the discharge direction. In other cases, as provided below, the mixing tubes 41 may be curved and/or helically formed so to achieve the desired direction of discharge. Additionally, combinations of linear segments and curved or helical segments may be used, as well as any other geometry that allows the exiting flow of the mixing tubes 41 to discharge at a tangential angle relative to the central axis 36 of the primary flow annulus 51.

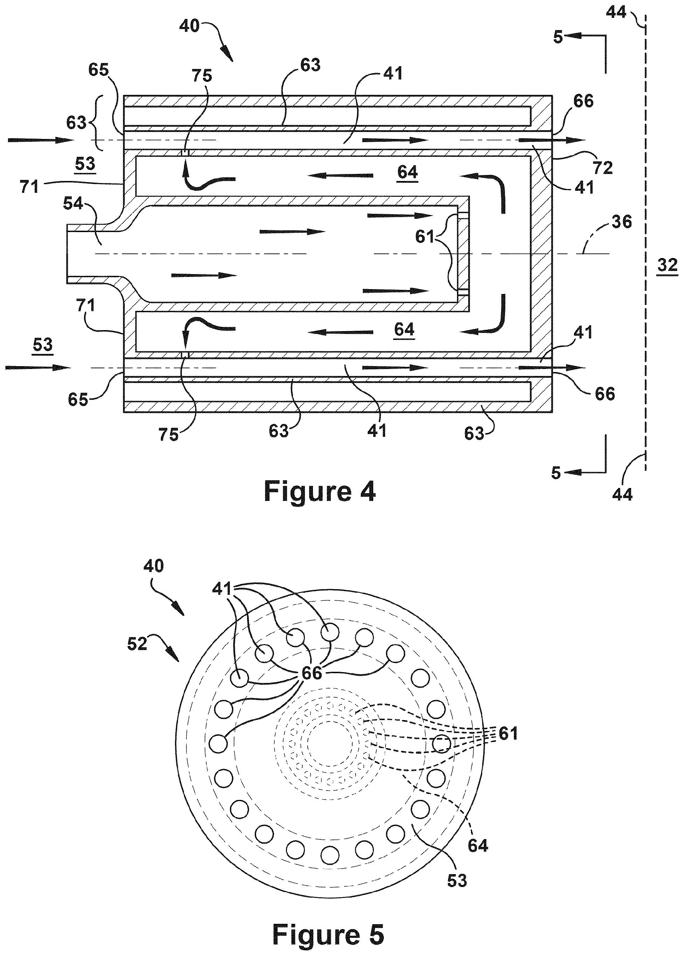

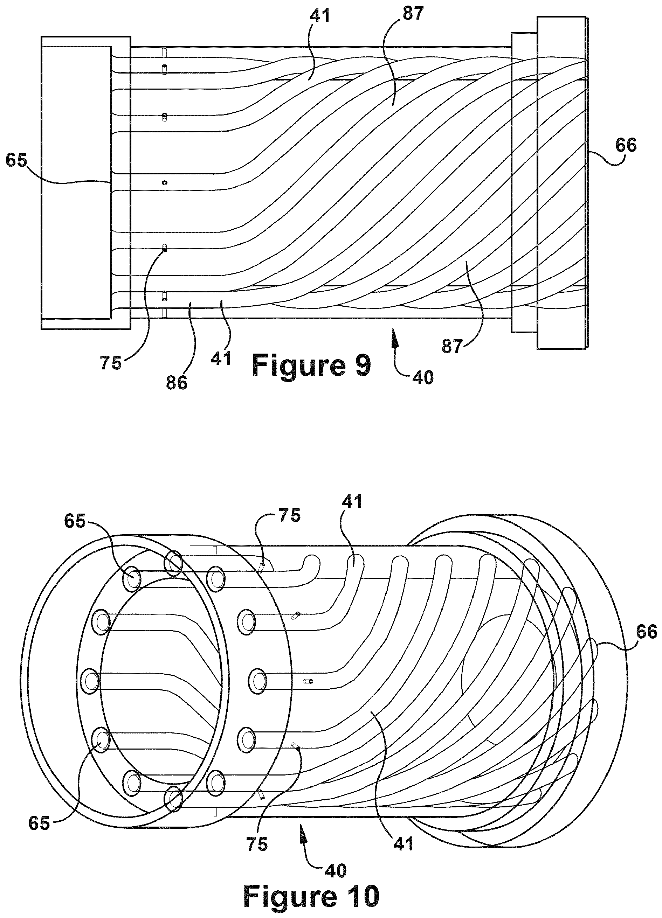

Figures 8 through 12 illustrate exemplary embodiments that include a mixing tube 41 having angled or canted configurations according to the present invention. Figure 8 shows an exemplary helical configuration for the mixing tubes 41, and is also provided to illustrate an alternative preferred arrangement by which fuel and air may be delivered to the mixing tubes 41 of a pilot nozzle 40. In this case, an outboard fuel channel 85 is disposed within the centerbody wall 63 and extends axially from an upstream connection made with a fuel conduit 57 that, as illustrated in Figures 3 and 4, also supplies fuel to the ports 58 of the swirler vanes 56. As such, given the configuration of Figure 8, instead of the fuel being delivered from a fuel plenum located radially inward relative to the mixing tubes 41, the fuel is delivered from the fuel channel 85 that is disposed just outboard of the mixing tubes 41.

As will be appreciated, the outboard fuel channel 85 may be formed as an annular passage or as several discrete tubes formed about the circumference of the centerbody 52 so to desirably coincide with the locations of the mixing tubes 41. One or more fuel ports 75 may be formed so to fluidly connect the outboard fuel channel 85 to each of the mixing tubes 41. In this manner, an upstream end of each of the mixing tubes 41 may be connected to a fuel source. As further illustrated, the secondary flow annulus 53 may be formed within the centerbody 52 and extend axially therethrough so to deliver a supply of air to each of the inlets 65 of the mixing tubes 41. Unlike the embodiment of Figures 3 and 4, it will be appreciated that the centrally disposed center supply line 54 of the centerbody 52 is not used to deliver fuel to the mixing tubes 41. Even so, the center supply line 54 may be included so to provide or enable other fuel types for the fuel nozzle 12. In any case, the interior passage or secondary flow annulus 53 may be formed as an elongated passage that is defined between a central structure, such as the outer surface of the center supply line 54, and an inner surface of the centerbody wall 63. Other configurations are also possible.

Similar to the configuration taught in Figure 7, each of the mixing tubes 41 may include a canted outlet section 79 that is tangentially angled relative to the central axis 36 of the fuel nozzle 12. In this manner, the discharge direction 80 for the fuel-air mixture moving through the mixing tubes 41 may be similarly canted relative to the central axis 36 of the fuel nozzle 12. According to the preferred embodiments of Figures 8 through 10, each of the mixing tubes 41 includes an upstream linear section 86 that transitions to a downstream helical section 87, which as indicated, curves around the central axis 36. In one embodiment, the fuel ports 74 are located in the upstream linear section 86, and the downstream helical section 87 promotes mixing of the fuel and air, causing the constituents to change direction within the mixing tube 41. This change of direction has been found to create secondary flows and turbulence that promote mixing between the fuel-air moving therethrough, such that a well-mixed fuel-air mixture emerges from the mixing tubes 71 at the desired angled discharge direction.

According to preferred embodiments, multiple mixing tubes 41 are provided about the circumference of the pilot nozzle 40. For example, between ten and fifteen tubes may be defined within the centerbody wall 63. The mixing tubes 41 may be spaced at regular circumferential intervals. The direction of discharge 80 defined by the canted outlet section 79 may be configured so that it is consistent with or in the same direction as the direction of swirl created within the primary flow annulus 51 by the swirler vanes 56. More specifically, according to a preferred embodiment, the canted outlet section 79 may be angled in the same direction as the swirler vanes 56 so to produce flow that swirls in the same direction about the central axis 36.

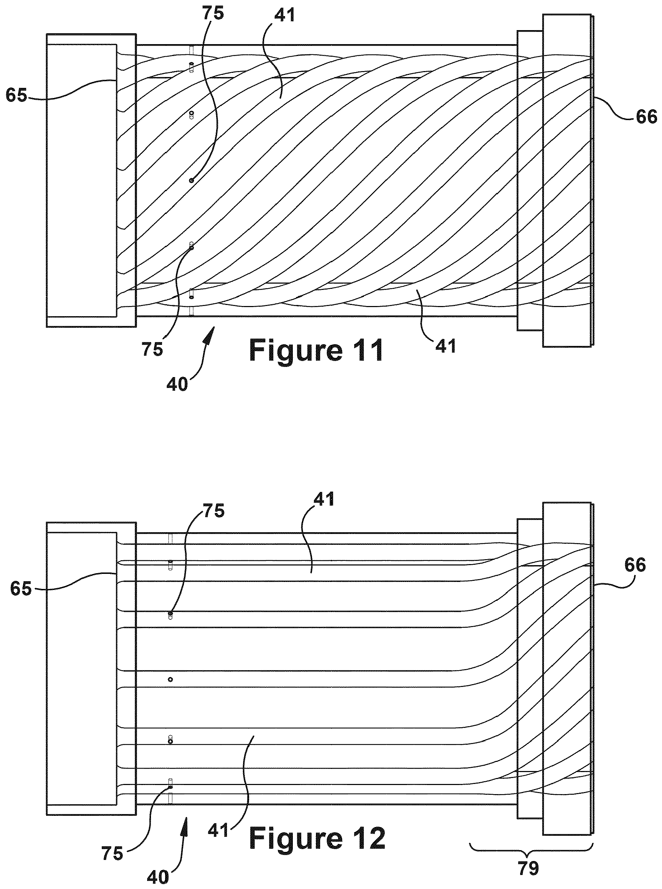

Another exemplary embodiment is provided in Figure 11, which includes mixing tubes 41 having a curved helical formation for the entire mixing length of the mixing tubes 41. As used herein, the mixing length of a mixing tube 41 is the axial length between the location of the initial (i.e., furthest upstream) fuel port 75 and the outlet 66. As will be appreciated, each of the mixing tubes 41 may include at least one fuel port 75. According to alternative embodiments, each mixing tube 41 may include a plurality of fuel ports 75. The fuel ports 75 may be axially spaced along the mixing length of the mixing tube 41. According to a preferred embodiment, however, the fuel ports 75 are positioned or concentrated toward the upstream end of the mixing tube 41, which results in the fuel and air being brought together early so more mixing may occur before the combined flow is injected from the outlets 66 into the combustion chamber 32.

According to another embodiment, as illustrated in Figure 12, the canted portion of the mixing tube 41 may be confined to just a downstream section of the mixing tube 41, which as shown represents an axially narrow length that is adjacent to the outlet 66. With this configuration, beneficial results may still be achieved because the desirable swirling pattern may still be induced within the collective discharge from the mixing tubes 41. However, the level of fuel-air mixing within the mixing tube 41 may be less than optimal.

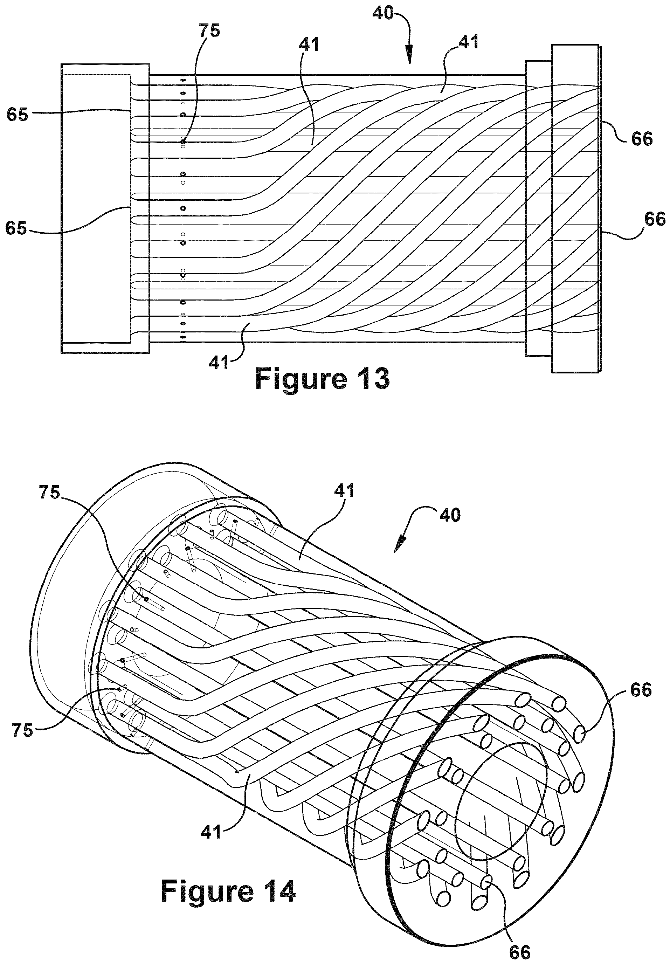

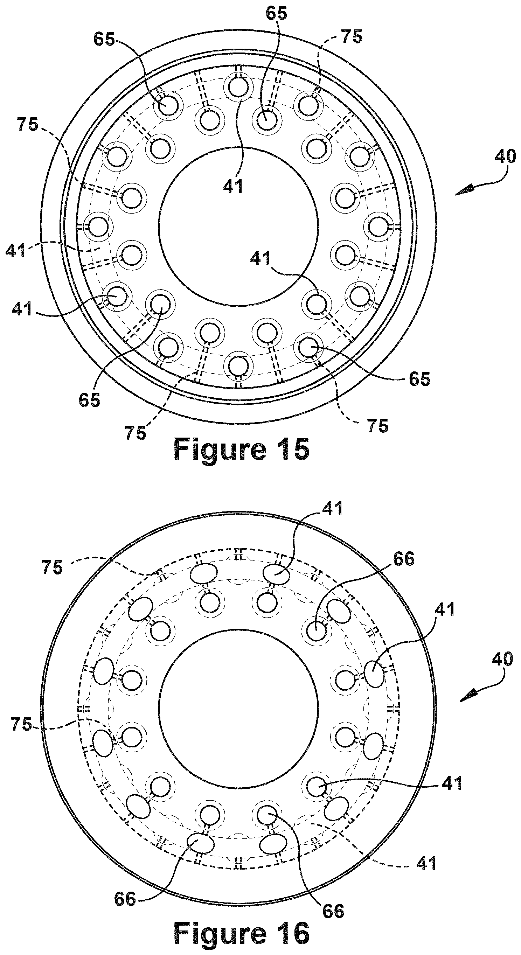

Figures 13 through 16 illustrate additional embodiments in which linear and helical mixing tubes 41 are combined. Figures 13 and 14 illustrate, respectively, a side view and a perspective view of a preferred way in which linear axial mixing tubes 41 (i.e., those that extend parallel to the central axis 36) may be arranged with canted mixing tubes 41 within the centerbody wall 63 of the nozzle 40. As shown, the canted mixing tubes 41 may be helically formed. As will be appreciated, the canted mixing tubes 41 also may be formed with a linearly segmented configuration that includes a bend or elbow junction between segments, such as the example of Figure 12. Figure 15, as will be appreciated, provides an inlet view that shows the inlets 65 of the axial and canted mixing tubes 41 on the upstream face 71 of the pilot nozzle 40. Figure 16 provides an outlet view illustrating a representative arrangement of the outlets 66 of the axial and canted mixing tubes 41 on the downstream face 72 of the pilot nozzle 40. According to alternative embodiments, the canted mixing tubes 41 may be configured to co-swirl, i.e. swirl about the central axis 36 in the same direction, with the swirling mix of the parent nozzle of the primary flow annulus 51.

The axial and canted mixing tubes may both be supplied from the same air and fuel sources. Alternatively, each of the different types of mixing tubes may be supplied from different supply feeds such that the level of fuel and air reaching the mixing tubes is either appreciably different or controllable. More specifically, as will be appreciated, supplying each tube type with its own controllable air and fuel supplies enables flexibility in machine operation, which may allow adjustment or tuning of the fuel-air or equivalence ratio within the combustion chamber. Different settings may be used throughout range of loads or operating levels, which, as discovered by the applicants of the presentation, offers a way to address particular areas of concern that may occur at different engine load levels.

For example, in a turndown operating mode when combustion temperatures are low relative to baseload, CO is the primary emission concern. In such cases, equivalence ratios may be increased to increase tip zone temperatures for improved CO burnout. That is, because the canted mixing tubes act to draw parent nozzle reactants back to the nozzle tip, the temperature at the tip zone (i.e., the tip of the nozzle) may remain cooler than if the tubes were not tangentially angled. In some instances, this may contribute to excess CO in the emissions of the combustor. However, by adding or increasing the axial momentum through the addition of the axial mixing tubes (as illustrated in Figures 13 through 16), the amount of recirculation flow can be altered, limited, or controlled, and, therefore, enable a means for controlling the tip zone temperature. This methodology, thus, may serve as an additional way to improve combustion characteristics and emission levels when the engine is operated in certain modes.

According to other embodiments, for example, the present invention includes using conventional control systems and methods for manipulating air flow levels between the two different types of mixing tubes. According to one embodiment, the airflow to the axial mixing tubes 41 may be increased to prevent cooler reactant products from the parent nozzle from being drawn back into the tip zone of the pilot nozzle 40. This may be used to increase the temperature of the tip zone, which may decrease the levels of CO.

Additionally, combustion dynamics may have a strong correlation to shearing in the reacting zones. By adjusting the amount of air directed through each of the different types of mixing tubes (i.e., the canted and axial), the amount of shear can be tuned to a level that positively affects combustion. This may be accomplished through configuring metering orifices so to deliver uneven air amounts to the different types of mixing tubes. Alternatively, active control devices may be installed and actuated via conventional methods and systems so to vary air supply levels during operation. Further, control logic and/or a control feedback loop may be created so that the control of the devices responds to an operating mode or measured operating parameter. As mentioned, this may result in varying control settings according to the mode of operation of the engine, such as when operating at full load or reduced load levels, or in reaction to measured operator parameter readings. Such systems may also include the same type of control methods in regard to varying the amount of fuel being supplied to the different types of mixing tubes. This may be accomplished through prearranged component configurations, i.e., orifice sizing and the like, or through more active, real-time control. As will be appreciated, operating parameters such as temperatures within the combustion chamber, acoustic variations, reactant flow patterns, and/or other parameters related to combustor operation may be used as part of a feedback loop in such control system.

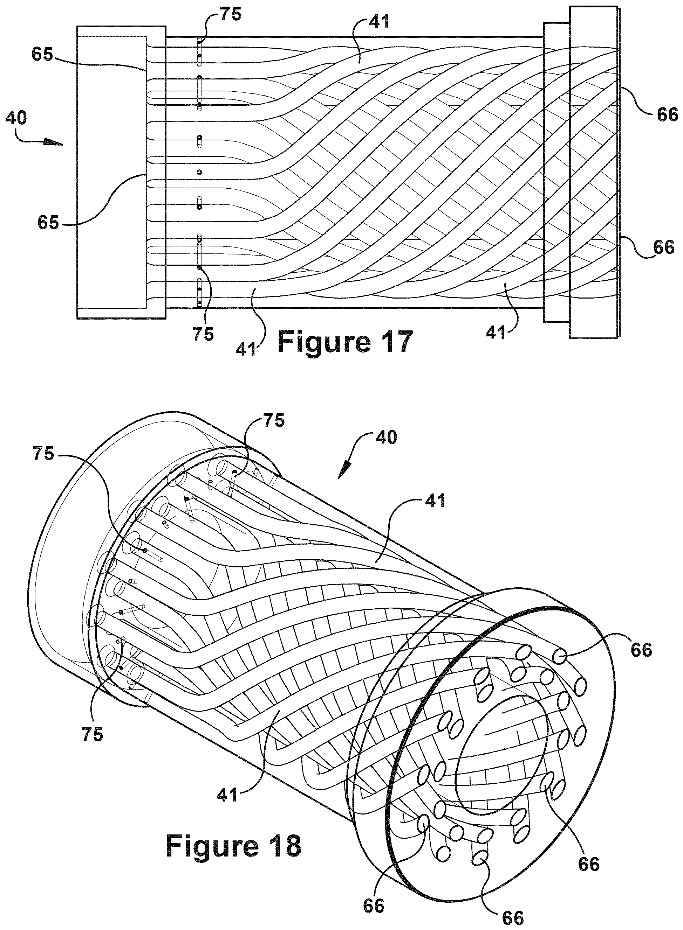

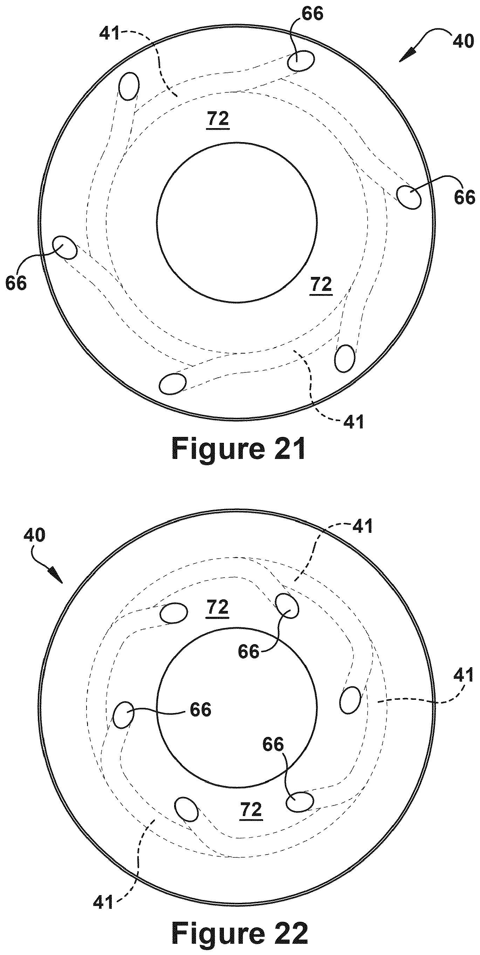

As will be appreciated, these types of control methods and systems also may be applicable to the other embodiments discussed herein, including any of those involving combining mixing tubes in the same pilot nozzle that have dissimilar configurations or swirl directions (including, for example, the counter-swirl embodiments discussed in relation to Figures 17 through 20, or the embodiments of Figures 21 and 22 that illustrate ways in which a subset of flow tubes may be configured to have discharge directions that include radial components). Further, these types of control methods and systems may be applicable to the other embodiments discussed herein, including any of those involving combining mixing tubes in the same pilot nozzle that have dissimilar configurations or swirl directions (such as the counter-swirl embodiments discussed in relation to Figures 17 through 20).

Additionally, such methods and systems may be applied to pilot nozzle configurations in which each of the mixing tubes are configured in the same way and aligned parallel to each other. In these instances, the control systems may operate to control combustion processes by varying air and/or fuel splits between the parent nozzle and the pilot nozzle to affect combustion characteristics. According to other embodiments, the control methods and systems may be configured so to vary fuel and/or air supply levels unevenly about the circumference of the pilot nozzle, which, for example, may be used to interrupt certain flow patterns or to prevent harmful acoustics from developing. Such measures may be taken on a preemptive basis or in response to a detected anomaly. The fuel and air supply, for example, may be increased or decreased to a particular subset of the mixing tubes. This action may be taken on a predefined periodic basis, in response to a measured operating parameter, or other condition.

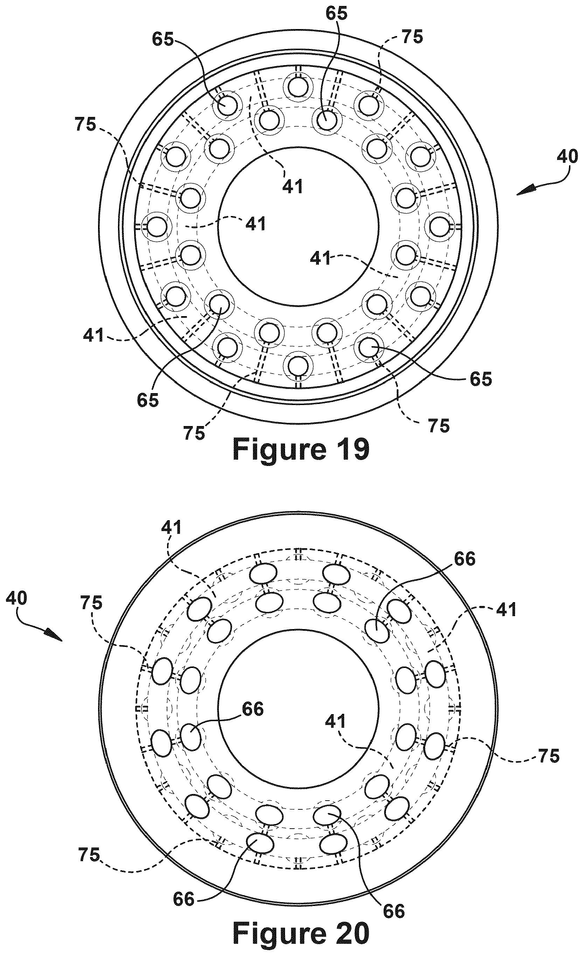

Figures 17 through 20 illustrate additional exemplary embodiments in which canted mixing tubes 41 having counter-swirling configurations defined within the centerbody wall 63. Figures 17 and 18 illustrate, respectively, a side view and a perspective view of a representative arrangement of the counter-swirling helical mixing tubes 41 within the centerbody wall 63. Figure 19, as will be appreciated, provides an inlet view of the pilot nozzle 40, illustrating a representative arrangement of the inlets 65 of the counter-swirling helical mixing tubes 41 on the upstream face 71 of the pilot nozzle 40. Figure 20 provides an outlet view of the pilot nozzle 40, illustrating a preferred way in which the outlets 66 of the counter-swirling helical mixing tubes 41 may be arranged on the downstream face 72 of the pilot nozzle 40. As will be appreciated, the addition of counter-swirling canted mixing tubes 41 may be used in the ways discussed above to control the temperature at the tip zone of the nozzle. Additionally, the counter-swirling canted mixing tubes promote greater mixing in the tip zone area due to increased shear caused by the counter-swirling pilot flows, which may be advantageous for certain operating conditions.

Figures 21 and 22 illustrate alternative embodiments in which a radial component is added to the discharge direction of the mixing tubes 41. As will be appreciated, Figure 21 illustrates an exit view of an alternative embodiment of mixing tubes that includes an outboard component to the direction of discharge. In contrast, Figure 22 illustrates an exit view of an alternative embodiment of mixing tubes that includes an inboard component to the direction of discharge. In these ways, the canted mixing tubes of the present invention may be configured to have both a radial component and a tangential component in discharge direction. According to an alternative embodiment, mixing tubes may be configured to have a discharge direction having radial, but no circumferential, component. Thus, inboard and the outboard radial components may be added to either of the axial and the canted mixing tubes. According to exemplary embodiments, the angle of the inboard and/or the outboard radial component may include a range of between 0.1° and 20°. As mentioned above, the radial component may be included on a subset of the mixing tubes and thereby may be used to manipulate the shearing effect of the pilot nozzle so to favorably control recirculation.

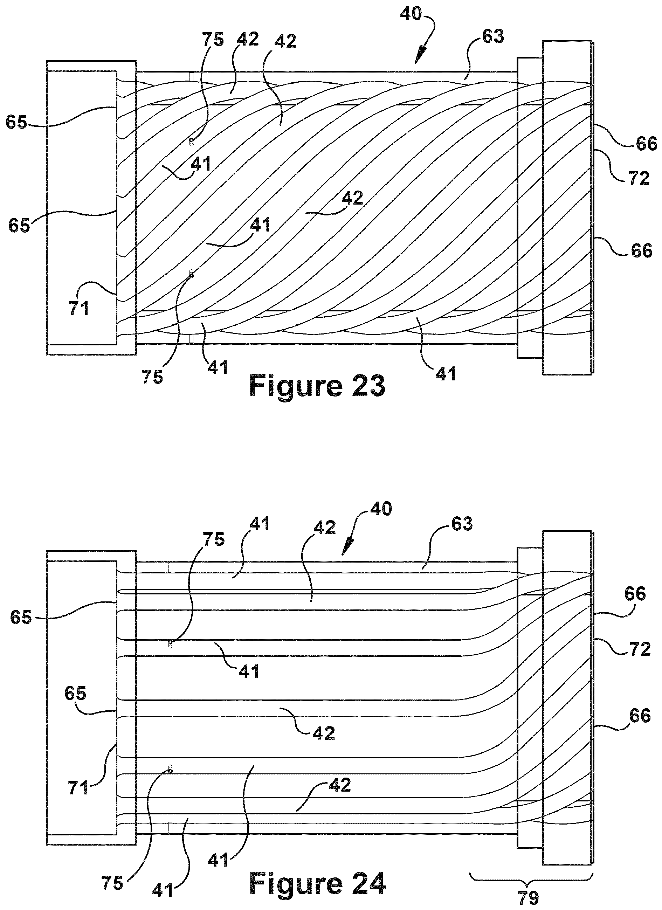

Figures 23 and 24 illustrate alternative embodiments in which the axially elongated tubes formed through the pilot nozzle include tubes dedicated to delivering just air (which will be referred to as air tubes 42), as well as those tubes dedicated to delivering an air and fuel mixture, which may be configured according to any of the various mixing tubes 41 already discussed herein. Similar to those mixing tubes 41, the air tubes 42 may be defined within the centerbody wall 63 and may elongate between inlets 65 defined through an upstream face 71 and outlets 66 formed through a downstream face 72 of the pilot nozzle 40. In fact, the air tubes 42 may include any of the attributes discussed herein related to any of the mixing tubes 41, except that the air tubes 42 lack the fuel ports 75 or any other connection to a fuel source. Instead, the air tubes 42 may include sidewalls (through which the fuel ports 75 of the mixing tubes 41 would be formed) that are constructed having an uninterrupted solid sealing structure extending between the inlets 65 and the outlets 66. The uninterrupted sidewall sealing structure of the air tubes 42 may be conventionally formed using any solid material suitable for sealing or segregating the air flow moving through the air tube 42 from the secondary fuel supply or any other fuel supply. As illustrated, the air tubes 42 may be configured as canted tubes. The canted configuration of the air tubes 42 may be in accordance with any of the canted configurations already discussed herein that relates to the mixing tubes 41.

According to certain preferred embodiments-as shown in Figures 23 and 24-each of the mixing tubes 41 and air tubes 42 of the pilot nozzle 40 may be configured as a canted tube. This configuration may be in accordance with any of the canted tube configurations already discussed herein. Accordingly, the canted mixing tubes 41 and air tubes 42 may include a parallel arrangement. Additionally, the tangential discharge angle for each of the canted mixing tubes 41 and air tubes 42 may include an angle of between 10° and 70°, or, according to other embodiments, 20° and 55°. Further the pilot nozzle 40 may have a plurality of each of the mixing tubes 41 and air tubes 42. For example, according to certain exemplary embodiments, the pilot nozzle may include between 2 and 10 mixing tubes 41 and between 2 and 10 air tubes 42. The mixing tubes 41 and the air tubes 42 may be circumferentially spaced at regular intervals within the centerbody wall. According to preferred embodiments, the mixing tubes 41 and air tubes 42 are circumferentially spaced within the centerbody wall 63 according to an alternating arrangement. As used herein, an "alternating arrangement" means that the placement of one of the mixing tubes 41 is alternated with the placement of one of the air tubes 42. As will be appreciated, this type of arrangement results in the each of the mixing tubes 41 having air tubes 42 disposed to each side of it, while each of the air tubes 42 would have mixing tubes 41 disposed to each side of it.

As will be appreciated, the inclusion of the air tubes 42 of Figures 23 and 24 may enhance aspects of performance of pilot nozzles that include the canted or swirling configuration. For example, the flame stability benefits associated with such canted or swirling configurations may be achieved, while the inclusion of the air tubes 42 may further reduce NOx formation. Specifically, the air delivered by the air tubes 42 may reduce local flame temperatures resulting in a NOx reduction.

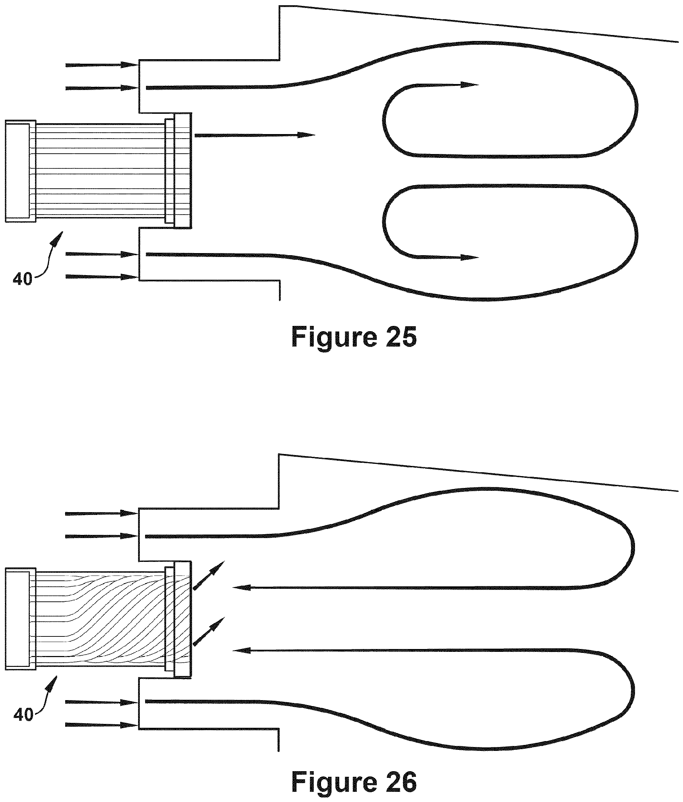

Figure 25 schematically illustrates results of a directional flow analysis of a pilot nozzle 40 having axial mixing tubes 41 that include an axial outlet section, while Figure 26 schematically illustrates a results of a directional flow analysis of canted mixing tubes 41 having a canted outlet section. Axially mixing tubes 41, as illustrated, may oppose the reversed flow created by the swirl induced by the parent nozzles, which may compromise flame stability and increases the likelihood of lean blow out. The canted outlet section, in contrast, may be configured to swirl the pilot reactants around the fuel nozzle axis in the same direction as the swirl created in the primary or parent nozzle. As the results indicate, this swirling flow proves beneficial because the pilot nozzle now works in tandem with the parent nozzle to create and/or enhance a central recirculation zone. As illustrated, the recirculation zone associated with the canted mixing tubes includes a much more pronounced and centralized recirculation that results in the bringing reactants from a position far downstream back to the outlet of the fuel nozzle. As will be appreciated, the central recirculation zone is the foundation for swirl stabilized combustion because the products of combustion are drawn back to the nozzle exit and introduced to fresh reactants so to ensure the ignition of those reactants and, thereby, continue the process. Thus, the canted mixing tubes may be used to improve the recirculation and thereby further stabilize the combustion, which may be used to further stabilize lean fuel-air mixtures that may enable lower NOx emission levels. Additionally, as discussed, pilot nozzles having canted mixing tubes may enable performance benefits related to CO emissions levels. This is achieved due to the richening circulation that creates local hot zone at the exit of the fuel nozzle, which attaches nozzle flames and enables further CO burnout. Additionally, the pronounced recirculation produced by canted mixing tubes of the present invention may aid in CO burnout by mixing the products and CO generated during combustion back into the central recirculation zone so to minimize the chance for CO to escape unburnt.

This written description uses examples to disclose the invention and also to enable any person skilled in the art to practice the invention, including making and using any devices or systems and performing any incorporated methods. The patentable scope of the invention is defined by the claims, and may include other examples that occur to those skilled in the art. Such other examples are intended to fall within the scope of the claims if they include structural elements that do not differ from the literal language of the claims, or if they include equivalent structural elements with insubstantial differences from the literal language of the claims.

Various aspects and embodiments of the present invention are defined by the following numbered clauses:
1. A fuel nozzle for a combustor of a gas turbine engine, the fuel nozzle comprising:
   an axially elongated centerbody;
   an axially elongated peripheral wall formed about the centerbody so to define a primary flow annulus therebetween, wherein the peripheral wall defines a central axis of the fuel nozzle;
   a primary fuel supply and a primary air supply in fluid communication with an upstream end of the primary flow annulus; and
   a pilot nozzle comprising a downstream section of the centerbody, the pilot nozzle including:
      tubes, defined within a centerbody wall, the tubes including air tubes and mixing tubes, wherein each of the tubes axially elongate between an inlet defined through an upstream face of the pilot nozzle and an outlet formed through a downstream face of the pilot nozzle;
      a secondary air supply configured so to fluidly communicate with the inlet of each of the air and mixing tubes;
      a fuel port positioned between the inlet and the outlet of each of the mixing tubes for connecting each of the mixing tubes to a secondary fuel supply; and
      an uninterrupted sidewall sealing structure between the inlet and the outlet of each of the air tubes that segregates an air flow therein from the secondary fuel supply;
   wherein a plurality of the tubes are configured as canted tubes that are angled relative the central axis of the fuel nozzle so to induce a downstream swirling flow in a collective discharge therefrom.
2. The fuel nozzle according to clause 1, wherein, at the outlet formed through the downstream face of the pilot nozzle, the canted mixing tubes each comprises a tangentially angled orientation relative to the central axis of the fuel nozzle;
   wherein the collective discharge comprises a combination of a discharge from the plurality of mixing tubes and a discharge from the plurality of the air tubes; and
   wherein:
   a plurality of the mixing tubes are configured as the canted tubes; and
   a plurality of the air tubes are configured as the canted tubes.
3. The fuel nozzle according to any preceding clause, wherein the discharge from the plurality of mixing tubes comprise a fuel and air mixture, and the discharge from the plurality of the air tubes comprises air that is fuel-free; and
   wherein the canted tubes are each configured such that the downstream swirling flow of the collective discharge swirls in a same direction as a downstream swirling flow induced by swirler vanes that are positioned within the primary flow annulus.
4. The fuel nozzle according to any preceding clause, wherein each of the canted tubes comprises an outlet section that is defined as an axially narrow downstream section of the canted tube residing adjacent to the outlet;
   wherein the outlet section of each of the canted tubes is configured to impart a discharge direction to a discharge therefrom;
   wherein the discharge direction defines an acute tangential discharge angle relative to a downstream continuation of the central axis of the fuel nozzle, the tangential discharge angle comprising a range between 10° and 70°; and
   wherein the canted tubes are each configured such that the downstream swirling flow of the collective discharge swirls in an opposite direction as a downstream swirling flow induced by swirler vanes positioned within the primary flow annulus.
5. The fuel nozzle according to any preceding clause, wherein each of the canted tubes comprises an outlet section that is defined as an axially narrow downstream section of the canted tube residing adjacent to the outlet;
   wherein a tangential discharge angle is formed between a downstream continuation of a central axis of the outlet section of each of the canted tubes and a downstream continuation of the central axis of the fuel nozzle; and
   wherein the tangential discharge angle for each of the canted tubes comprises an acute angle.
6. The fuel nozzle according to any preceding clause, wherein each of the mixing and air tubes of the pilot nozzle is configured as one of the canted tubes;
   wherein the canted tubes comprise a parallel arrangement with respect to each other; and
   wherein the tangential discharge angle for each of the canted tubes comprises an angle of between 10° and 70°.
7. The fuel nozzle according to any preceding clause, wherein the peripheral wall and the centerbody wall each comprises a cylindrical shape, and wherein the peripheral wall is concentrically arranged about the centerbody wall; and
   wherein the centerbody includes axially stacked sections including: a forward section comprising the secondary fuel supply and the secondary air supply; and an aft section configured as the pilot nozzle;
   wherein the forward section of the centerbody comprises an axially extending center supply line and, formed about the center supply line, a secondary flow annulus that extends axially between a connection made to an air source formed toward an upstream end of the centerbody and the upstream face of the pilot nozzle; and
   wherein the centerbody wall defines an outer wall of the centerbody and an outboard boundary of the secondary flow annulus.
8. The fuel nozzle according to any preceding clause, wherein the primary flow annulus comprises a swozzle configuration that includes a plurality of swirler vanes that extending radially across the primary flow annulus; and
   wherein the swirler vanes comprise a tangentially angled orientation relative to the central axis of the fuel nozzle for inducing a downstream flow therefrom to swirl about the central axis in a first direction; and
   wherein the fuel port of each of the mixing tubes comprises a lateral fuel port for injecting fuel through an opening formed through a sidewall of the mixing tube.
9. The fuel nozzle according to any preceding clause, wherein, from a connection made with one of the mixing tubes, each of the fuel ports extends in an outboard direction so to connect with the secondary fuel supply, the secondary fuel supply comprising a fuel channel formed just outboard of the mixing tubes and within the centerbody wall.
10. The fuel nozzle according to any preceding clause, wherein, from a connection made with one of the mixing tubes, each of the fuel ports extends in an inboard direction so to connect with the secondary fuel supply; and
   wherein each of the fuel ports comprises an upstream position in the mixing tube relative to an anticipated flow moving through the mixing tube from the inlet to the outlet thereof.
11. The fuel nozzle according to any preceding clause, wherein each of the mixing tubes comprises a plurality of the fuel ports; and
   wherein the plurality of the fuel ports are concentrated toward an upstream end of the mixing tube relative to an anticipated flow moving through the mixing tube from the inlet to the outlet thereof.
12. The fuel nozzle according to any preceding clause, wherein each of the mixing tubes is configured to accept an air flow through the inlet and a fuel flow through the fuel port for discharging a mixture thereof through the outlet;
   wherein the outlet of each of the mixing tubes and the air tubes fluidly communicates with a combustion chamber of the combustor; and
   wherein each of the mixing and air tubes comprises a segmented configuration that includes an upstream segment and a downstream segment to each side of a junction that marks a direction change.
13. The fuel nozzle according to any preceding clause, wherein the air and mixing tubes each comprises a configuration in which the upstream segment is linear and the downstream section is curved.
14. The fuel nozzle according to any preceding clause, wherein the air and mixing tubes each comprises a configuration in which the upstream segment is linear and the downstream section is linear.
15. The fuel nozzle according to any preceding clause, wherein the air and mixing tubes each comprises a configuration in which the upstream segment is curved and the downstream section is linear.
16. The fuel nozzle according to any preceding clause, wherein the air and mixing tubes each comprises a configuration in which the upstream segment is curved and the downstream section is curved.
17. The fuel nozzle according to any preceding clause, wherein the air and mixing tubes each comprises a configuration in which the upstream segment is linear and axially oriented, and the downstream segment is curved and helically formed about the central axis of the fuel nozzle.
18. The fuel nozzle according to any preceding clause, wherein the pilot nozzle comprises: between 2 and 10 mixing tubes; and between 2 and 10 air tubes;
   wherein each of the mixing and air tubes of the pilot nozzle is configured as one of the canted tubes;
   wherein the canted tubes comprise a parallel arrangement with respect to each other; and
   wherein the tangential discharge angle for each of the canted tubes comprises an angle of between 20° and 55°.
19. The fuel nozzle according to any preceding clause, wherein the pilot nozzle comprises: between 2 and 10 mixing tubes; and between 2 and 10 air tubes; and
   wherein the mixing tubes and air tubes are circumferentially spaced within the centerbody wall according to an alternating arrangement such that:
   ones of the mixing tubes are disposed to each side of each of the air tubes; and
   ones of the air tubes are disposed to each side of each of the mixing tubes.
20. A gas turbine having a combustor that includes a fuel nozzle, wherein the fuel nozzle comprises:
   an axially elongated centerbody;
   an axially elongated peripheral wall formed about the centerbody so to define a primary flow annulus therebetween, wherein the peripheral wall defines a central axis of the fuel nozzle;
   a primary fuel supply and a primary air supply in fluid communication with an upstream end of the primary flow annulus; and
   a pilot nozzle comprising a downstream section of the centerbody, the pilot nozzle including:
      tubes, defined within a centerbody wall, the tubes including air tubes and mixing tubes, wherein each of the tubes axially elongate between an inlet defined through an upstream face of the pilot nozzle and an outlet formed through a downstream face of the pilot nozzle;
      a secondary air supply configured so to fluidly communicate with the inlet of each of the air and mixing tubes;
      a fuel port positioned between the inlet and the outlet of each of the mixing tubes for connecting each of the mixing tubes to a secondary fuel supply; and
      an uninterrupted sidewall sealing structure between the inlet and the outlet of each of the air tubes that segregates an air flow therein from the secondary fuel supply;
   wherein a plurality of the tubes are configured as canted tubes that are angled relative the central axis of the fuel nozzle so to induce a downstream swirling flow in a collective discharge therefrom, the canted mixing tubes each comprising a tangentially angled orientation relative to the central axis of the fuel nozzle at the outlet formed through the downstream face of the pilot nozzle; and
   wherein:
      a plurality of the mixing tubes are configured as the canted tubes; and
      a plurality of the air tubes are configured as the canted tubes.

## Claims

1. A fuel nozzle for a combustor of a gas turbine engine, the fuel nozzle comprising:
an axially elongated centerbody;
an axially elongated peripheral wall formed about the centerbody so to define a primary flow annulus therebetween, wherein the peripheral wall defines a central axis of the fuel nozzle;
a primary fuel supply and a primary air supply in fluid communication with an upstream end of the primary flow annulus; and
a pilot nozzle comprising a downstream section of the centerbody, the pilot nozzle including:
tubes, defined within a centerbody wall, the tubes including air tubes and mixing tubes, wherein each of the tubes axially elongate between an inlet defined through an upstream face of the pilot nozzle and an outlet formed through a downstream face of the pilot nozzle;
a secondary air supply configured so to fluidly communicate with the inlet of each of the air and mixing tubes;
a fuel port positioned between the inlet and the outlet of each of the mixing tubes for connecting each of the mixing tubes to a secondary fuel supply; and
an uninterrupted sidewall sealing structure between the inlet and the outlet of each of the air tubes that segregates an air flow therein from the secondary fuel supply;
wherein a plurality of the tubes are configured as canted tubes that are angled relative the central axis of the fuel nozzle so to induce a downstream swirling flow in a collective discharge therefrom.

2. The fuel nozzle according to claim 1, wherein, at the outlet formed through the downstream face of the pilot nozzle, the canted mixing tubes each comprises a tangentially angled orientation relative to the central axis of the fuel nozzle;
wherein the collective discharge comprises a combination of a discharge from the plurality of mixing tubes and a discharge from the plurality of the air tubes; and
wherein:
a plurality of the mixing tubes are configured as the canted tubes; and
a plurality of the air tubes are configured as the canted tubes.

3. The fuel nozzle according to claim 2, wherein the discharge from the plurality of mixing tubes comprise a fuel and air mixture, and the discharge from the plurality of the air tubes comprises air that is fuel-free; and
wherein the canted tubes are each configured such that the downstream swirling flow of the collective discharge swirls in a same direction as a downstream swirling flow induced by swirler vanes that are positioned within the primary flow annulus.

4. The fuel nozzle according to claim 2, wherein each of the canted tubes comprises an outlet section that is defined as an axially narrow downstream section of the canted tube residing adjacent to the outlet;
wherein the outlet section of each of the canted tubes is configured to impart a discharge direction to a discharge therefrom;
wherein the discharge direction defines an acute tangential discharge angle relative to a downstream continuation of the central axis of the fuel nozzle, the tangential discharge angle comprising a range between 10° and 70°; and
wherein the canted tubes are each configured such that the downstream swirling flow of the collective discharge swirls in an opposite direction as a downstream swirling flow induced by swirler vanes positioned within the primary flow annulus.

5. The fuel nozzle according to claim 2, wherein each of the canted tubes comprises an outlet section that is defined as an axially narrow downstream section of the canted tube residing adjacent to the outlet;
wherein a tangential discharge angle is formed between a downstream continuation of a central axis of the outlet section of each of the canted tubes and a downstream continuation of the central axis of the fuel nozzle; and
wherein the tangential discharge angle for each of the canted tubes comprises an acute angle.

6. The fuel nozzle according to claim 5, wherein each of the mixing and air tubes of the pilot nozzle is configured as one of the canted tubes;
wherein the canted tubes comprise a parallel arrangement with respect to each other; and
wherein the tangential discharge angle for each of the canted tubes comprises an angle of between 10° and 70°.

7. The fuel nozzle according to claim 6, wherein the peripheral wall and the centerbody wall each comprises a cylindrical shape, and wherein the peripheral wall is concentrically arranged about the centerbody wall; and
wherein the centerbody includes axially stacked sections including: a forward section comprising the secondary fuel supply and the secondary air supply; and an aft section configured as the pilot nozzle;
wherein the forward section of the centerbody comprises an axially extending center supply line and, formed about the center supply line, a secondary flow annulus that extends axially between a connection made to an air source formed toward an upstream end of the centerbody and the upstream face of the pilot nozzle; and
wherein the centerbody wall defines an outer wall of the centerbody and an outboard boundary of the secondary flow annulus.

8. The fuel nozzle according to claim 6, wherein each of the mixing tubes comprises a plurality of the fuel ports; and
wherein the plurality of the fuel ports are concentrated toward an upstream end of the mixing tube relative to an anticipated flow moving through the mixing tube from the inlet to the outlet thereof.

9. The fuel nozzle according to claim 6, wherein each of the mixing tubes is configured to accept an air flow through the inlet and a fuel flow through the fuel port for discharging a mixture thereof through the outlet;
wherein the outlet of each of the mixing tubes and the air tubes fluidly communicates with a combustion chamber of the combustor; and
wherein each of the mixing and air tubes comprises a segmented configuration that includes an upstream segment and a downstream segment to each side of a junction that marks a direction change.

10. The fuel nozzle according to claim 9, wherein the air and mixing tubes each comprises a configuration in which the upstream segment is linear and the downstream section is curved or wherein the air and mixing tubes each comprises a configuration in which the upstream segment is curved and the downstream section is linear.

11. The fuel nozzle according to claim 9, wherein the air and mixing tubes each comprises a configuration in which the upstream segment is linear and the downstream section is linear or wherein the air and mixing tubes each comprises a configuration in which the upstream segment is curved and the downstream section is curved.

12. The fuel nozzle according to claim 9, wherein the air and mixing tubes each comprises a configuration in which the upstream segment is linear and axially oriented, and the downstream segment is curved and helically formed about the central axis of the fuel nozzle.

13. The fuel nozzle according to claim 5, wherein the pilot nozzle comprises:
between 2 and 10 mixing tubes; and between 2 and 10 air tubes;
wherein each of the mixing and air tubes of the pilot nozzle is configured as one of the canted tubes;
wherein the canted tubes comprise a parallel arrangement with respect to each other; and
wherein the tangential discharge angle for each of the canted tubes comprises an angle of between 20° and 55°.

14. The fuel nozzle according to claim 6, wherein the pilot nozzle comprises:
between 2 and 10 mixing tubes; and between 2 and 10 air tubes; and
wherein the mixing tubes and air tubes are circumferentially spaced within the centerbody wall according to an alternating arrangement such that:
ones of the mixing tubes are disposed to each side of each of the air tubes; and
ones of the air tubes are disposed to each side of each of the mixing tubes.

15. A gas turbine having a combustor that includes a fuel nozzle, wherein the fuel nozzle comprises:
an axially elongated centerbody;
an axially elongated peripheral wall formed about the centerbody so to define a primary flow annulus therebetween, wherein the peripheral wall defines a central axis of the fuel nozzle;
a primary fuel supply and a primary air supply in fluid communication with an upstream end of the primary flow annulus; and
a pilot nozzle comprising a downstream section of the centerbody, the pilot nozzle including:
tubes, defined within a centerbody wall, the tubes including air tubes and mixing tubes, wherein each of the tubes axially elongate between an inlet defined through an upstream face of the pilot nozzle and an outlet formed through a downstream face of the pilot nozzle;
a secondary air supply configured so to fluidly communicate with the inlet of each of the air and mixing tubes;
a fuel port positioned between the inlet and the outlet of each of the mixing tubes for connecting each of the mixing tubes to a secondary fuel supply; and
an uninterrupted sidewall sealing structure between the inlet and the outlet of each of the air tubes that segregates an air flow therein from the secondary fuel supply;
wherein a plurality of the tubes are configured as canted tubes that are angled relative the central axis of the fuel nozzle so to induce a downstream swirling flow in a collective discharge therefrom, the canted mixing tubes each comprising a tangentially angled orientation relative to the central axis of the fuel nozzle at the outlet formed through the downstream face of the pilot nozzle; and
wherein:
a plurality of the mixing tubes are configured as the canted tubes; and
a plurality of the air tubes are configured as the canted tubes.
